# EUROPÄISCHE PATENTSCHRIFT

(11) **EP 1 537 381 B1**
(45) Veröffentlichungstag und Bekanntmachung des Hinweises auf die Patenterteilung: **11.07.2018**
(21) Anmeldenummer: 03732232.8
(22) Anmeldetag: 19.05.2003
(51) Int. Cl.: G01C 3/08, G01S 17/36, G01S 7/481

(54) **VORRICHTUNG UND VERFAHREN ZUR OPTISCHEN DISTANZMESSUNG**
DEVICE AND METHOD FOR OPTICAL DISTANCE MEASUREMENT
DISPOSITIF ET PROCEDE DE TELEMETRIE OPTIQUE

(30) Priorität: 28.08.2002 DE 10239435
(43) Veröffentlichungstag der Anmeldung: 08.06.2005
(73) Patentinhaber: ROBERT BOSCH GMBH, 70442 Stuttgart (DE)
(72) Erfinder: STIERLE, Joerg, 71111 Waldenbuch (DE); WOLF, Peter, 70771 Leinfelden-Echterdingen (DE); RENZ, Kai, 70771 Leinfelden-Echterdingen (DE)
(86) Internationale Anmeldenummer: PCT/DE2003/001598
(87) Internationale Veröffentlichungsnummer: WO 2004/020941

(56) Entgegenhaltungen:
- EP-A- 1 176 429
- EP-A1- 0 738 899
- DE-A- 19 811 550
- JP-A- H09 197 046
- US-A- 5 898 484
- US-B1- 6 226 076
- US-B1- 6 411 371

## Beschreibung

### Stand der Technik

Die Erfindung geht aus von einer Vorrichtung zur optischen Distanzmessung nach dem Oberbegriff des Anspruchs 1 bzw. von einem Verfahren zur optischen Distanzmessung nach dem Oberbegriff des Anspruchs 6.

Es sind handgehaltene Laserentfernungsmessgeräte bekannt, die an einer Deckseite ihres Gehäuses eine Bedieneinheit mit Bedientasten zur Aktivierung einer Distanzmessung aufweisen. Bei bekannten Geräten des Standes der Technik besteht die Bedieneinheit für das Messgerät aus einem Tastenfeld, dem beispielsweise unterschiedliche Messfunktionen zugeordnet sind. Dabei wird die eigentliche Messfunktion durch Betätigung einer zumeist optisch hervorgehobenen Messtaste aktiviert.

Bei dem bekannten optischen Entfernungsmesser DLE 30 der Robert Bosch GmbH ist - nach Einschalten des Gerätes - der eigentliche Messvorgang durch Betätigung einer Doppelhubtaste realisiert. Ein leichtes Drücken auf die Messtaste aktiviert die im Gerät integrierte Lichtquelle, so dass das Gerät in einen sogenannten "Pointer-Modus" übergeht, bei dem für eine gewisse Zeit das Gerät einen kontinuierlichen, sichtbaren Laserstrahl aussendet, der dazu dienen kann, ein gewünschtes Zielobjekt anzupeilen. Durch das Durchdrücken der Messtaste in ihre zweite Schaltstellung wird ein moduliertes Mess-Signal des Messgerätes ausgesendet, dessen rücklaufender Signalanteil im Messgerät detektiert und zur Bestimmung der Entfernung zwischen dem Messgerät und dem angepeilten Zielobjekt ausgewertet wird. Der von einer im Messgerät integrierten Steuer- und Auswerteeinheit ermittelte Messwert für die Distanz wird in einem Display des Messgerätes angezeigt.

Verbleibt das Messgerät länger als eine vorgegebene Zeitspanne im "Pointer-Modus", so schaltet die Steuer- und Auswerteeinheit des Messgerätes die Lichtquelle automatisch wieder aus. Ebenso ist die Lichtquelle ausgeschaltet, nachdem eine Entfernungsmessung durchgeführt worden ist.

Bei dem Laserentfernungsmessgerät PD25 der Firma Hilti dient eine einzelne Taste eines Bedienfeldes zum Einschalten des Gerätes, der Aktivierung einer ebenfalls zeitbegrenzten "Pointer-Funktion" durch nochmaliges Drücken dieser Taste, sowie dem Starten des eigentlichen Entfernungsmessvorganges durch nochmalige Betätigung dieser Taste. Speziell im Falle einer Reihenmessung erfordert der Messvorgang mit diesem Gerät somit eine Vielzahl von Tastenbetätigungen. Auch ist die Mehrfachbelegung von Verschiedenen Funktionen auf ein und derselben Taste eines Bedienelementes vielfach Ursache einer Fehlbedienung.

Die US 6,411,371 B1 offenbart eine Vorrichtung zur optischen Distanzmessung in der geodätischen und industriellen Vermessung. Die Vorrichtung der US 6,411,371 B1 weist eine Sendereinheit mit einer oder zwei optischen Strahlungsquellen auf, die eine beugungsbegrenzte, sichtbare Strahlung und eine divergente sichtbare oder infrarote Strahlung emittieren. Die Strahlung beider Strahlungsquellen wird durch ein gemeinsames Objektiv hindurchgeführt und auf ein Zielobjekt gerichtet. Die vom Zielobjekt reflektierte oder gestreute Strahlung wird von demselben Objektiv empfangen. Es sind Selektionsmittel zur Selektion der Strahlung der Strahlungsquellen vorgesehen. Damit kann die Distanz zu kooperativen und nicht-kooperativen Zielobjekten in geringen und großen Entfernungen mit hoher Ortsauflösung gemessen werden.

Insbesondere offenbart die US 6,411,371 B1 vor dem Detektor im Empfangsstrahlengang ein Selektionsmittel zur Selektion der vom Objektiv empfangenen Strahlung der Strahlungsquellen vorzusehen. Das Selektionsmittel kann eine manuell oder elektrisch bediente Vorrichtung wie zum Beispiel ein Filterrad oder ein Filterschieber sein, die einzelne optische Filter in den Strahlengang einbringen. Die einzelnen Filter lassen die Strahlung nur der einen Strahlungsquelle oder nur der anderen Strahlungsquelle hindurch. Damit empfängt der Detektor selektiv und nacheinander die Strahlung der Strahlungsquellen wobei die Strahlung anderer Wellenlängen abgeblockt wird.

Die DE 198 11 550 A1 offenbart einen Laserentfernungsmesser mit einer Schaltungsanordnung zur Erzeugung wenigstens zweier Signale mit unterschiedlicher Frequenz. Es ist in diesem System vorgesehen, dass aus einem Frequenzoszillator (Grundtakt) wenigstens ein Frequenzpaar mit dicht benachbarter Frequenz abgeleitet wird. Dadurch, dass verschiedene Frequenzen aus einem einzigen Frequenzoszillator (Grundtaktoszillator) digital abgeleitet werden, besitzen alle diese Frequenzen dieselbe relative Genauigkeit wie der Grundtaktoszillator. Die Schaltungsanordnung der DE 198 11 550 A1 generiert dabei Oberschwingungen. Nach schmalbandigem Filtern, zum Beispiel mit einem Oberflächenwellenfilter, entstehen daraus weitere, sehr hohe Frequenzen mit gleicher Stabilität wie der Grundtaktoszillator, wobei Frequenzen über 100 MHz möglich sind.

Ferner offenbaren US 5898484 A und EP 0738899 A1 Vorrichtungen zur optischen Distanzmessung mit einer ersten Bedieneinheit sowie mit mindestens einer weiteren Bedieneinheit.

### Vorteile der Erfindung

Die erfindungsgemäße Vorrichtung zur optischen Distanzmessung gemäß dem Anspruch 1 weist eine Bedieneinheit mit mindestens einer Bedienfunktion zur Aussendung eines modulierten optischen Mess-Signales zum Zwecke einer Distanzmessung auf. Durch Aktivierung dieser Bedieneinheit sendet eine im Messgerät integrierte Lichtquelle ein moduliertes Lichtsignal in Richtung auf ein Zielobjekt aus. Das vom Zielobjekt rücklaufende und von einem Empfänger des Messgerätes detektierte Mess-Signal wird zur Ermittlung der Distanz des Messgerätes zum Zielobjekt ausgewertet. Das erfindungsgemäße Messgerät verfügt über mindestens eine weitere Bedieneinheit zur Aussendung eines optischen Signals, wobei die mindestens eine weitere Bedieneinheit gestattet, die mindestens eine Lichtquelle der Vorrichtung ein- und/oder auszuschalten, sodass durch Betätigung der mindestens einen weiteren Bedieneinheit die Lichtquelle auf Dauerbetrieb umstellbar ist. Durch diese weitere Bedieneinheit, die in einem konkreten Ausführungsbeispiel eine separate, zusätzliche Taste sein kann, lässt sich eine im Messgerät integrierte Lichtquelle aktivieren, um ein Zielobjekt anzupeilen. Diese Bedienfunktion lässt sich unabhängig von den Bedienfunktionen für die Abstandsmessung nutzten und ermöglicht es so ein Lichtsignal zur Ausrichtung des Messgerätes in einfacher Weise zur Verfügung zu stellen.

Das der Erfindung zugrundeliegende Verfahren zur optischen Distanzmessung, insbesondere zur optischen Distanzmessung mittels eines handgehaltenen Messgerätes, bei dem über die Betätigung einer ersten Bedieneinheit eine in einem Gehäuse des Messgerätes angeordneten Lichtquelle ein moduliertes optisches Messsignal in Richtung auf ein Zielobjekt, dessen Distanz zum Messgerät ermittelt werden soll, ausgesendet wird, ermöglicht es, dass durch die Betätigung mindestens einer weiteren Bedieneinheit die im Messgerät angeordnete Lichtquelle ein- bzw. ein- und ausgeschaltet werden kann.

Durch die in den abhängigen Ansprüchen aufgeführten Maßnahmen sind vorteilhafte Weiterbildungen der in den unabhängigen Ansprüchen angegebenen Vorrichtung bzw. des beanspruchten Verfahrens möglich.

In vorteilhafter Weise lässt sich durch das mindestens eine weitere Bedienelement die mindestens eine Lichtquelle der erfindungsgemäßen Vorrichtung zur optischen Distanzmessung ein- und ausschalten. Auf diese Weise ist es möglich, die erfindungsgemäße Vorrichtung in einer Dauerfunktion zu betreiben. Das Messgerät in diesem "Dauer-Modus" erleichtert das Anvisieren der Zielfläche, da im herkömmlichen "Pointer-Modus" der Messgeräte des Standes der Technik der Laser nach einer gewissen Zeit deaktiviert wird.

Darüber hinaus ermöglicht die erfindungsgemäße Vorrichtung zur optischen Distanzmessung bzw. das zu Grunde liegende, erfindungsgemäße Verfahren eine Vereinfachung der Bedienung des Messgerätes. Eine zu möglichen Fehlbedienungen führende Doppel- oder Mehrfachbelegung der Bedienelemente des Messgerätes mit unterschiedlichen Bedienfunktionen wird in der erfindungsgemäßen Vorrichtung weitgehend vermieden. Die Dauerlaserfunktion ist durch eine separate Bedieneinheit nebst zugehörigem Symbol deutlich gekennzeichnet, so dass eine einfache Bedienung des Messgeräts auch unabhängig von einer Distanzmessung möglich ist. Insbesondere im Fall von Messreihen mit einer Vielzahl von Einzelmessungen bietet das erfindungsgemäße Verfahren bzw. die erfindungsgemäße Vorrichtung zur Durchführung dieses Verfahrens einen deutlichen Anwendungsvorteil gegenüber entsprechenden Messgeräten des Standes der Technik.

Sind eine Vielzahl von Messungen vom Anwender durchzuführen, so ist es hilfreich und vom Bedienkomfort des Messgerätes auch erwünscht, die Anzahl der notwendigen Tastenbetätigungen zur Ermittlung der Messergebnisse zu verringern. Dies lässt sich in vorteilhafter Weise durch die Funktion Dauerlaser des erfindungsgemäßen Messgerätes erreichen. Durch Betätigung der mindestens einen weiteren Bedieneinheit kann die Lichtquelle des Messgerätes auf Dauerbetrieb umgestellt werden. Nach dem Anvisieren der Zielfläche wird beim ersten Tastendruck auf die Messtaste der ersten Bedieneinheit des Messgerätes sofort eine Messung ausgelöst, wobei die das modulierte Mess-Signal aussendende Lichtquelle nach Abschluss der Messung eingeschaltet bleibt, so dass beim nächsten Durchdrücken der Messtaste die nächste Distanzmessung durchgeführt wird. Eine erste Tastenbetätigung zur Auslösung des "Pointer-Mode", um die Zielfläche anzuvisieren, mit anschließendem, erneuten Tastendruck zur Auslösung der Messung für jede einzelne Messung der Vielzahl vom Messungen innerhalb einer Reihenmessungen, ist mit dem erfindungsgemäßen Verfahren nicht mehr notwendig. Somit reduziert sich die notwendige Anzahl der Tastenbetätigungen um nahezu die Hälfte.

In vorteilhafter Weise ist die mindestens eine weitere Bedieneinheit zur Aktivierung der Dauerlaserfunktion durch eine eigens dafür bestimmte Taste mit dazugehörigen, dem Bediener intuitiv zugänglichem Symbol so auf der Bedienseite des Messgerätes angebracht, dass ein Anwender der erfindungsgemäßen Vorrichtung, ohne die Bedienungsanleitung des Gerätes zu lesen, die Funktion Dauerlaser findet und diese funktionsgerecht bedienen kann.

Auch ist die zweite Bedieneinheit zur Realisierung einer Dauerlaserfunktion in unmittelbarer Nähe der Messtaste der ersten Bedieneinheit angeordnet, so dass diese beiden Tasten leicht zugänglich sind und ohne ein Umgreifen betätigt werden können.

Weitere Vorteile der erfindungsgemäßen Vorrichtung bzw. des erfindungsgemäßen Verfahrens ergeben sich aus der Zeichnung und der zugehörigen Beschreibung.

### Zeichnung

In der Zeichnung ist ein Ausführungsbeispiel der erfindungsgemäßen Vorrichtung zur optischen Distanzmessung dargestellt, welches in der nachfolgenden Beschreibung näher erläutert werden soll. Die Figuren der Zeichnung, deren Beschreibung sowie die auf die Erfindung gerichteten Ansprüche enthalten zahlreiche Merkmale in Kombination. Ein Fachmann wird diese Merkmale bzw. die darauf bezogenen Ansprüche auch einzeln betrachten und zu weiteren sinnvollen Kombinationen und Ansprüchen zusammenfassen.

Es zeigen
- Figur 1: eine erfindungsgemäße Vorrichtung zur optischen Distanzmessung in einer perspektivischen Darstellung, schräg von oben gesehen,
- Figur 2: eine vereinfachte, schematisierte Gesamtübersicht über die Komponenten einer erfindungsgemäßen Vorrichtung zur optischen Distanzmessung.

### Beschreibung des Ausführungsbeispiels

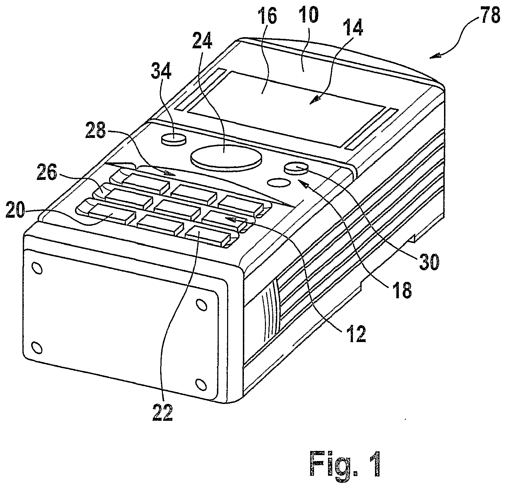

Figur 1 zeigt ein handgehaltenes Laserentfernungsmessgerät als ein Ausführungsbeispiel der erfindungsgemäßen Vorrichtung zur optischen Distanzmessung. Das Laserentfernungsmessgerät der Figur 1 weist ein Gehäuse 10 auf, in welchem eine erste Bedieneinheit 12, eine Ausgabeeinheit 14 in Form eines graphischen Displays 16, sowie eine zweite Bedieneinheit 18 integriert sind. Die erste Bedieneinheit 12 umfasst eine Eingabeeinheit 20 mit Bedientasten 22 zur Auswahl eines Messmodus, wie beispielsweise einer Längen-, Flächen- oder Volumenmessung. Ebenfalls zur ersten Bedieneinheit 12 gehört eine Messtaste 24 zur Auslösung eines Messvorgangs für die Entfernungsbestimmung. Die Bedientasten 22 der ersten Bedieneinheit sind in Vertiefungen 26 des Gehäuses 10 versenkt und unterscheiden sich in ihrer Form und Größe deutlich von der Messtaste 24

Die Messtaste 24 und die in unmittelbarer Nähe zur Messtaste 24 angeordnete zweite Bedieneinheit 18 sind durch eine stegartige Erhöhung 28 von den Bedientasten 22 der ersten Bedieneinheit getrennt.

Die zweite Bedieneinheit 18 wird im Ausführungsbeispiel nach Figur 1 gebildet durch eine Taste 30 mit zugehörigem grafischen Symbol 32. Durch Betätigung der Taste 30 wird die im Gehäuse 10 des Messgerätes integrierte Lichtquelle aktiviert und ein eventuell ebenfalls im Gerät integrierter Shutter geöffnet, so dass das Messgerät ein Dauerlichtsignal aussendet. Erst durch erneute Betätigung der Taste 30 bzw. eine Trennung des Gerätes von der Spannungsversorgung wird dieses Dauerlichtsignal wieder ausgeschaltet. Es kann jedoch auch vorgesehen sein, dass eine Abschaltung der Lichtquelle oder des gesamten Messgerätes über eine entsprechend einprogrammierte Zeitverzögerung erfolgt. Die hat den Vorteil, dass Messgerät vor einem unbeabsichtigten Dauerbetrieb zu schützen.

In vorteilhafter Weise kann die Taste 30 zur Betätigung eines "Dauerlicht-Modus" des erfindungsgemäßen Messgerätes ebenfalls vertieft im Gehäuse des Messgerätes angebracht sein. Auf diese Weise wird eine unbeabsichtigte Auslösung des "Dauerlicht-Modus" sicher verhindert und eine Gefährdung dritter Personen durch den kontinuierlich ausgesendeten Laserstrahl vermieden.

In diesem "Dauerlicht-Modus" kann in einfacher Weise ein Zielobjekt anvisiert werden. Wird in diesem Modus, also nach Betätigung der Taste 30 die Messtaste 24 des Messgerätes betätigt, so wird die im Gerät integrierte Lichtquelle über ein Steuergerät in ihrer Intensität frequenzmoduliert und entsprechend den Vorgaben der Bedientasten 22 wird ein Messprogramm, beispielsweise eine einfache Längen- oder Flächenmessung, durchgeführt. Nach Abschluss dieses Messvorganges wird die Modulation der Lichtquelle beendet, die Lichtquelle des Messgerätes selbst bleibt jedoch weiter aktiviert. Das Ergebnis des Messprogramms wird auf dem grafischen Display 16 des Messgerätes dargestellt. Soll eine weitere Messung, beispielsweise im Rahmen einer Volumenbestimmung, durchgeführt werden, so muss lediglich wieder die Messtaste 24 aktiviert werden, die die Modulation des Mess-Signals sowie die Durchführung der Distanzmessung startet.

Daüberhinaus besitzt das Messgerät nach dem Ausführungsbeispiel der Figur 1 eine weitere Bedieneinheit 34, die bei Betätigung das graphische Display 16 des Gerätes beleuchtet.

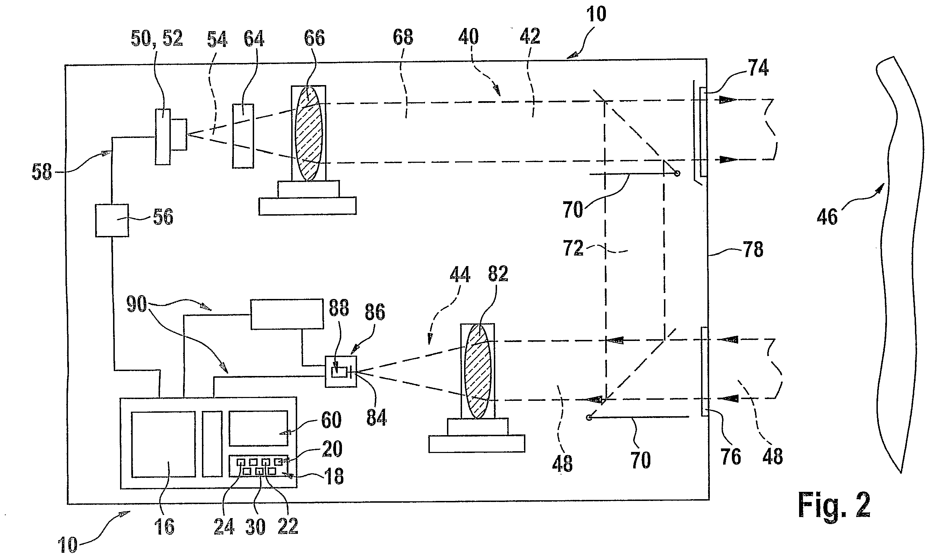

Figur 2 zeigt in schematischer Weise ein optisches Entfernungsmessgerät mit den wichtigsten Komponenten zur Beschreibung seines prinzipiellen Aufbaus. Die Vorrichtung weist ein Gehäuse 10 auf, das beispielsweise gemäß den Vorgaben der Figur 1 ausgestaltet sein kann. In dem Gehäuse 10 ist ein Sendeast 40 zur Erzeugung eines optischen Mess-Signals 42 sowie ein Empfangsast 44 zur Detektion des von einem Zielobjekt 46 rücklaufenden Mess-Signals 48 ausgebildet. Der Sendeast 40 weist neben einer Reihe von nicht weiter dargestellten Komponenten, insbesondere eine Lichtquelle 50 auf, die im Ausführungsbeispiel der Figur 2 durch eine Halbleiterlaserdiode 52 gebildet wird. Die Verwendung anderer Lichtquellen im Sendeast 40 der erfindungsgemäßen Vorrichtung ist in anderen Ausführungsbeispielen ebenso möglich.

Die Laserdiode 52 des Ausführungsbeispiels nach Figur 1 sendet einen Lichtstrahl in Form eines für das menschlichen Auge sichtbaren Lichtbündels 54 aus. Dazu wird die Laserdiode 52 über ein Steuergerät 56 betrieben, welches durch eine entsprechende Elektronik bei Bedarf eine Modulation des elektrischen Eingangssignals 58 auf die Diode 52 erzeugen kann. Das Steuergerät 56 wiederum erhält die benötigten Frequenzsignale zur Modulation der Laserdiode 52 von einer Steuer- und Auswerteeinheit 60 des erfindungsgemäßen Messgerätes.

In anderen Ausführungsbeispielen der erfindungsgemäßen Vorrichtung kann das Steuergerät 56 auch direkt integraler Bestandteil der Steuer- und Auswerteeinheit 60 sein.

Durch Betätigung einer Bedientaste 22 wird ein in der Steuer- und Auswerteeinheit 60 ablelegtes Messprogramm abgerufen und entsprechend den Vorgaben dieses Messprogramms wird die 52 über das Steuergerät 56 angesteuert. Bei Betätigung der Messtaste 24 wird dann entsprechend den Vorgaben der Steuer- und Auswerteeinheit eine Distanzmessung durchgeführt.

Wird hingegen die Taste 30 des erfindungsgemäßen Messgerätes betätigt, so wird entsprechend den Vorgaben der Steuer- und Auswerteeinheit 60 das Steuergerät 56 derart angesteuert, dass die Laserdiode 52 in unmodulierter Weise eingeschaltet wird, so dass lediglich ein kontinuierliches Lichtsignal ausgesendet wird, welches nur aufgrund von statistischen Schwankungen leichte Variationen in der Amplitude zeigt. Ein solches Signal soll im Rahmen der vorliegenden Erfindung jedoch als unmoduliert gelten, da diesem Signal keinerlei Modulation aufgeprägt wird. In diesem Modus stellt das erfindungsgemäße Messgerät einen Dauerlaser (CW-Betrieb) dar, dessen ständig ausgesendetes Lichtsignal dazu benutzt werden kann, ein Zielobjekt 46 anzupeilen und das Messgerät in gewünschter Weise auszurichten. Durch nachfolgende Betätigung der Messtaste 24 schaltet das Steuergerät 56 auf einen Modulationsmodus für die Laserdiode 52 um, so dass mit diesem modulierten Lichtsignal eine Distanzmessung durchgeführt werden kann.

In alternativen Ausführungsformen der erfindungsgemäßen Vorrichtung beziehungsweise des erfindungsgemäßen Verfahrens ist vorgesehen, den Dauerbetrieb der Lichtquelle ("Dauerlicht-Modus") bei Betätigung der Taste 30 ebenfalls in modulierter Weise durchzuführen. Beispielhafter Weise kann durch einmalige, leichte Betätigung der Mess-Taste 24 ein "Pointer-Modus" der erfindungsgemäßen Vorrichtung eingestellt werden, der dazu führt, dass das Messgerät für eine vorgegebene Zeit einen Lichtstrahl zur Anpeilung des Zielobjektes aussendet. Wird die Messtaste 24 in diesem Modus ganz durchgedrückt, so wird eine Distanzmessung zwischen dem Messgerät und dem aktuell angepeilten Zielobjekt 46 durchgeführt. Im Gegensatz zu dem mit der Taste 30 der zweiten Bedieneinheit 18 zu realisierenden "Dauerlaser-Modus" schaltet das Steuergerät 56 die Laserdiode 52 nach einer solchen Messung wieder aus, so dass im Falle einer Reihenmessung die Messtaste 24 wiederum in ihre erste Schaltstellung gebracht werden muss, um einen Peilstrahl zur Anvisierung des Zielobjektes 46 für den nächsten Messvorgang zu erhalten.

Die Steuer- und Auswerteeinheit 60 umfasst eine Schaltungsanordnung 62, die unter anderem zumindest einen Quartzoszillator zur Bereitstellung der benötigten Frequenzsignale zur Modulation aufweist. Von diesen Signalen, von denen typischerweise mehrere, mit unterschiedlichen Frequenzen während einer Entfernungsmessung genutzt werden, wird das optische Mess-Signal in bekannter Weise moduliert. Der prinzipielle Aufbau einer solchen Vorrichtung und das entsprechende Verfahren zur Erzeugung unterschiedlicher Messfrequenzen ist beispielsweise der DE 198 11 550 C2 zu entnehmen, so dass an dieser Stelle lediglich auf dieses Zitat verwiesen wird und der Inhalt der zitierten Schrift auch Inhalt dieser Anmeldung sein soll, im Rahmen der vorliegenden Beschreibung hierauf aber nicht näher eingegangen wird.

Der aus der Halbleiterdiode 52 des Messgerätes austretende, intensitätsmodulierte bzw. unmodulierte Lichtstrahl 54 durchläuft eine erste Optik 64, die zu einer Verbesserung des Strahlprofils des Messstrahlbündels führt. Das Messstrahlbündel 54 durchläuft anschließend ein Kollimationsobjektiv 66, welches ein nahezu paralleles Lichtstrahlenbündel 68 erzeugt, das vom Gerät in Richtung auf ein zu vermessendes Zielobjekt 46 ausgesendet wird.

Im Sendeast 40 der erfindungsgemäßen Vorrichtung gemäß Figur 2 befindet sich zudem eine Vorrichtung 70 zur Erzeugung einer geräteinternen Referenzstrecke 72, mit der eine interne Kalibrierung des Messgerätes durchgeführt werden kann. Das Messsignal 42 wird durch ein optisches Fenster 74 aus dem Gehäuse 10 der Vorrichtung ausgekoppelt. Für den eigentlichen Messvorgang wird die Vorrichtung auf das gewünschte Zielobjekt 46 ausgerichtet. Dazu kann beispielsweise durch Betätigung der Taste 30 auf der Gehäuseoberseite des Messgerätes die Laserdiode 52 in einen "Dauerlaser-Modus" geschaltet werden. Das Messgerät sendet in diesem Modus einen kontinuierlichen, sichtbaren Lichtstrahl aus, der es ermöglicht, das gewünschte Zielobjekt 46 in einfacher Weise anzupeilen. Durch Betätigung der Messtaste 24 wird ein Messvorgang zur Bestimmung der Distanz zwischen dem Messgerät und dem Zielobjekt 46 gestartet, in dem von der Steuer- und Auswerteeinheit 60 des Messgerätes ein Signal an das Steuergerät 56 übermittelt wird, welches sodann das Ausgangssignal der Laserdiode 52 in erforderlicher Weise moduliert.

Das an dem gewünschten Zielobjekt 46 reflektierte oder auch gestreute Signal 48 gelangt zu einem gewissen Teil durch ein Eintrittsfenster 76 wieder in das Gehäuse 10 der erfindungsgemäßen Vorrichtung. Die durch das Eintrittsfenster 76 in der Stirnseite 78 der Vorrichtung eintreffende Messstrahlung bildet ein rücklaufendes, nahezu paralleles MessStrahlenbündel 80, welches auf ein Empfangsobjektiv 82 gelenkt wird. Das Empfangsobjektiv 82 bündelt das rücklaufende Messstrahlenbündel auf die aktive Fläche 84 einer Empfangseinrichtung 86.

Die Empfangseinrichtung 86 der erfindungsgemäßen Vorrichtung weist eine Fotodiode, beispielsweise eine Avalange-Fotodiode 88 auf, die in bekannter Weise das einkommende Lichtsignal in ein elektrisches Signal umwandelt. Das elektrische Signal wird über Verbindungsmittel 90 an die Steuer- und Auswerteeinheit 60 der Vorrichtung weitergeleitet. Die Steuer- und Auswerteeinheit 60 ermittelt aus dem elektrischen Signal die gesuchte Distanz zwischen der Vorrichtung und dem Zielobjekt. Die ermittelte Distanz kann beispielsweise in einer optischen Anzeigevorrichtung, beispielsweise einem grafischen Display 14, dem Benutzer des Gerätes mitgeteilt werden.

Die erfindungsgemäße Vorrichtung bzw. das zu Grunde liegende erfindungsgemäße Verfahren sind nicht auf das in den Zeichnungen beschriebene Ausführungsbeispiel beschränkt. Insbesondere ist die erfindungsgemäße Vorrichtung nicht beschränkt auf die Verwendung einer Laserdiode bzw. eines anders gearteten Lasers zur Erzeugung eines Peil- bzw. Messsignals.

Darüber hinaus ist das erfindungsgemäße Verfahren nicht beschränkt auf die Bestimmung der gesuchten Distanz durch ein Phasenmessverfahren.

## Patentansprüche

1. Vorrichtung zur optischen Distanzmessung, insbesondere eine handgehaltene Vorrichtung, mit mindestens einer in einem Gehäuse der Vorrichtung angeordneten Lichtquelle (50,52) zur Erzeugung eines optischen Signals (42), sowie mit einer ersten Bedieneinheit (12) mit mindestens einer Bedienfunktion (24) zur Aussendung des optischen Signals als moduliertes, optisches Messsignal (42) zum Zwecke einer Distanzmessung, **dadurch gekennzeichnet, dass** die Vorrichtung über mindestens eine weitere Bedieneinheit (18) zur Aussendung des optischen Signals (42) verfügt, wobei die mindestens eine weitere Bedieneinheit (18) so eingerichtet ist, dass damit die mindestens eine Lichtquelle (50,52) der Vorrichtung ein- bzw. ein- und ausschaltbar ist, sodass durch Betätigung der mindestens einen weiteren Bedieneinheit die Lichtquelle (50,52) zur Anpeilung eines Zielobjekts auf Dauerbetrieb umstellbar ist.

2. Vorrichtung nach Anspruch 1, **dadurch gekennzeichnet, dass** das durch Betätigung der mindestens einen weiteren Bedieneinheit (18) ausgesendete Licht (42) der Lichtquelle (50,52) der Vorrichtung unmoduliert ist.

3. Vorrichtung nach einem der vorhergehenden Ansprüche, **dadurch gekennzeichnet, dass** das durch Betätigung der mindestens einen weiteren Bedieneinheit (18) ausgesendete Licht (42) der Lichtquelle (50,52) der Vorrichtung im für das menschliche Auge sichtbaren Spektralbereich liegt.

4. Vorrichtung nach einem der vorhergehenden Ansprüche, **dadurch gekennzeichnet, dass** die mindestens eine Lichtquelle (50,52) der Vorrichtung ein Laser, insbesondere eine Halbleiterlaser-Diode (52) ist.

5. Verfahren zur optischen Distanzmessung, insbesondere ein Verfahren zur optischen Distanzmessung mittels eines handgehaltenen Messgerätes, bei dem über die Betätigung einer ersten Bedieneinheit (12) mittels mindestens einer in einem Gehäuse (10) des Messgerätes angeordneten Lichtquelle (50,52) ein optisches Signal als moduliertes optisches Messsignal (42) in Richtung auf ein Zielobjekt (46), dessen Distanz zum Messgerät ermittelt werden soll, ausgesendet wird, **dadurch gekennzeichnet, dass** durch die Betätigung mindestens einer weiteren Bedieneinheit (18) die mindestens eine im Messgerät angeordnete Lichtquelle (50,52) zur Aussendung des optischen Signals (42) ein- bzw. ein- und ausgeschaltet werden kann, sodass durch Betätigung der mindestens einen weiteren Bedieneinheit die Lichtquelle (50,52) zur Anpeilung des Zielobjekts auf Dauerbetrieb umstellbar ist.

6. Verfahren nach Anspruch 5, **dadurch gekennzeichnet, dass** das durch die Betätigung der mindestens einen weiteren Bedieneinheit (18) ausgesendete Licht (42) der mindestens einen im Messgerät angeordneten Lichtquelle (50,52) unmoduliert ausgesendet wird, solange die mindestens eine erste Bedieneinheit (12,24) nicht aktiviert wird.

7. Verfahren nach Anspruch 5, **dadurch gekennzeichnet, dass** durch Betätigung der ersten Bedieneinheit (12,24) des Gerätes eine Distanzmessung vorgenommen werden kann, auch wenn die zweite Bedieneinheit (18) des Gerätes aktiviert ist.

8. Verfahren nach einem der Ansprüche 5 bis 7, **dadurch gekennzeichnet, dass** die im Messgerät angeordnete Lichtquelle (50,52) zwischen zwei mittels der ersten Bedieneinheit (12,24) durchgeführten Distanzmessungen eingeschaltet bleibt, falls die Lichtquelle (50,52) über die mindestens eine weitere Bedieneinheit (18) eingeschaltet wurde.

## Claims

1. Apparatus for optical distance measurement, in particular a hand-held apparatus, having at least one light source (50, 52), which is arranged in a housing of the apparatus, for producing an optical signal (42), and having a first operator unit (12) having at least one operating function (24) for emitting the optical signal as a modulated, optical measurement signal (42) for the purpose of distance measurement, **characterized in that** the apparatus has at least one further operator unit (18) for emitting the optical signal (42), wherein the at least one further operator unit (18) is set up such that the at least one light source (50, 52) of the apparatus is able to be switched on or on and off therewith, such that, by actuating the at least one further operator unit, the light source (50, 52) is able to be switched to continuous operation for targeting a target object.

2. Apparatus according to Claim 1, **characterized in that** the light (42) of the light source (50, 52) of the apparatus, which is emitted by actuating the at least one further operator unit (18), is unmodulated.

3. Apparatus according to one of the preceding claims, **characterized in that** the light (42) of the light source (50, 52) of the apparatus, which is emitted by actuating the at least one further operator unit (18), is in the spectral range that is visible for the human eye.

4. Apparatus according to one of the preceding claims, **characterized in that** the at least one light source (50, 52) of the apparatus is a laser, in particular a semiconductor laser diode (52).

5. Method for optical distance measurement, in particular a method for optical distance measurement using a hand-held measuring device, in which an optical signal is emitted by way of at least one light source (50, 52), which is arranged in a housing (10) of the measuring device, as a modulated optical measurement signal (42) in the direction of a target object (46), the distance of which from the measuring device is intended to be ascertained, by actuating a first operator unit (12), **characterized in that**, by actuating at least one further operator unit (18), the at least one light source (50, 52), which is arranged in the measuring device, for emitting the optical signal (42) can be switched on or on and off such that, by actuating the at least one further operator unit, the light source (50, 52) is able to be switched to continuous operation for targeting the target object.

6. Method according to Claim 5, **characterized in that** the light (42), which is emitted by actuating the at least one further operator unit (18), of the at least one light source (50, 52), which is arranged in the measuring device, is emitted in unmodulated fashion as long as the at least one first operator unit (12, 24) is not being activated.

7. Method according to Claim 5, **characterized in that**, by actuating the first operator unit (12, 24) of the device, a distance measurement can be performed, even if the second operator unit (18) of the device is activated.

8. Method according to one of Claims 5 to 7, **characterized in that** the light source (50, 52), which is arranged in the measuring device, remains switched on between two distance measurements performed using the first operator unit (12, 24) if the light source (50, 52) was switched on via the at least one further operator unit (18).

## Revendications

1. Dispositif de mesure de distance optique, notamment dispositif tenu en main, comprenant au moins une source de lumière (50, 52) disposée dans un boîtier du dispositif et destinée à générer un signal optique (42), ainsi qu'une première unité de commande (12) comprenant au moins une fonction de commande (24) servant à l'émission du signal optique sous la forme d'un signal de mesure (42) optique modulé en vue d'une mesure de distance, **caractérisé en ce que** le dispositif dispose d'au moins une unité de commande supplémentaire (18) servant à l'émission du signal optique (42), l'au moins une unité de commande supplémentaire (18) étant conçue de telle sorte qu'elle permet d'allumer et d'éteindre l'au moins une source de lumière (50, 52) du dispositif, de telle sorte que par un actionnement de l'au moins une unité de commande supplémentaire, la source de lumière (50, 52) peut être permutée en mode de fonctionnement continu en vue du relèvement d'un objet cible.

2. Dispositif selon la revendication 1, **caractérisé en ce que** par un actionnement de l'au moins une unité de commande supplémentaire (18), la lumière (42) émise de la source de lumière (50, 52) du dispositif est non modulée.

3. Dispositif selon l'une des revendications précédentes, **caractérisé en ce que** par un actionnement de l'au moins une unité de commande supplémentaire (18), la lumière (42) émise de la source de lumière (50, 52) du dispositif se trouve dans la plage spectrale visible à l'oeil humain.

4. Dispositif selon l'une des revendications précédentes, **caractérisé en ce que** l'au moins une source de lumière (50, 52) du dispositif est un laser, notamment une diode laser à semiconducteur (52).

5. Procédé de mesure de distance optique, notamment procédé de mesure de distance optique au moyen d'un appareil de mesure tenu en main, avec lequel, par l'actionnement d'une première unité de commande (12), un signal optique sous la forme d'un signal de mesure (42) optique modulé est émis au moyen d'au moins une source de lumière (50, 52) disposée dans un boîtier (10) de l'appareil de mesure en direction d'un objet cible (46) dont il faut déterminer la distance par rapport à l'appareil de mesure, **caractérisé en ce que** l'au moins une source de lumière (50, 52) disposée dans l'appareil de mesure peut être allumée ou éteinte en actionnant au moins une unité de commande supplémentaire (18) en vue de l'émission du signal optique (42), de telle sorte que par un actionnement de l'au moins une unité de commande supplémentaire, la source de lumière (50, 52) peut être permutée en mode de fonctionnement continu en vue du relèvement d'un objet cible.

6. Procédé selon la revendication 5, **caractérisé en ce que** par un actionnement de l'au moins une unité de commande supplémentaire (18), la lumière (42) émise de l'au moins une source de lumière (50, 52) disposée dans l'appareil de mesure est émise non modulée dans que l'au moins une première unité de commande (12, 24) n'est pas activée.

7. Procédé selon la revendication 5, **caractérisé en ce qu'**une mesure de distance peut être effectuée par un actionnement de la première unité de commande (12, 24) de l'appareil, même lorsque la deuxième unité de commande (18) de l'appareil est activée.

8. Procédé selon l'une des revendications 5 à 7, **caractérisé en ce que** la source de lumière (50, 52) disposée dans l'appareil de mesure reste allumée entre deux mesures de distance effectuées au moyen de la première unité de commande (12, 24) dans le cas où la source de lumière (50, 52) a été allumée par le biais de l'au moins une unité de commande supplémentaire (18) .
